# EUROPEAN PATENT APPLICATION

(11) **EP 4 286 216 A1**
(43) Date of publication of application: **06.12.2023**
(21) Application number: 21922019.1
(22) Date of filing: 12.03.2021
(51) Int. Cl.: B60L 58/30, B60L 1/00

(54) **POWER CONTROL SYSTEM AND METHOD FOR FUEL CELL**

(30) Priority: 27.01.2021 CN 202110113152
(71) Applicant: Weichai Power Co., Ltd., Weifang, Shandong 261061 (CN)
(72) Inventor: HU, Gangyi, Weifang, Shandong 261061 (CN); QIN, Lang, Weifang, Shandong 261061 (CN); ZHANG, Tongguo, Weifang, Shandong 261061 (CN); GAO, Jinhong, Weifang, Shandong 261061 (CN); WANG, Yajie, Weifang, Shandong 261061 (CN)
(74) Representative: Ipside
(86) International application number: PCT/CN2021/080392
(87) International publication number: WO 2022/160420

(57) **Abstract**

The present application provides a power control system and method for a fuel cell. A main control unit is separately connected to a vehicle controller, an inverter control unit, each DC/DC control unit, and a high-voltage power distribution management unit, and generates a control instruction on the basis of the required power and a start/stop instruction that are sent by the vehicle controller. The inverter control unit controls an air compressor to output a required rotational speed. The high-voltage power distribution management unit controls a high-voltage BOP to power on and off. Multiple DC/DC control units are in parallel connection, and each DC/DC control unit receives a first high-voltage direct current, outputs a second high-voltage direct current and converges same into a second direct current filter circuit; after filtering is performed, same is connected to a vehicle drive system. On the basis of the required power and the start/stop instruction that are sent by the vehicle controller, the main control unit controls the inverter control unit, each DC/DC control unit, and the high-voltage power distribution management unit to perform corresponding operations without requiring the vehicle controller to separately control each unit and separately receive a state fed back by each unit, thereby reducing the complexity of control for the vehicle controller and reducing the burden of communication.

## Description

The present application claims priority to Chinese Patent Application No. 202110113152.2, titled "SYSTEM AND METHOD FOR CONTROLLING POWER FOR FUEL CELL", filed on January 27, 2021 with the China National Intellectual Property Administration, which is incorporated herein by reference in its entirety.

### FIELD

The present disclosure relates to the technical field of fuel cells, and in particular to a system and a method for controlling power for a fuel cell.

### BACKGROUND

Fuel cells can produce electricity efficiently and cleanly, and therefore are widely used in vehicle power systems.

When the fuel cell produces electricity, auxiliary machines including a DC/DC converter and an air compressor cooperate. However, since the auxiliary machines including the DC/DC converter and the air compressor are arranged separately, a vehicle control system has to directly control the auxiliary machines individually, resulting in complicated control performed by the vehicle control system. Moreover, the vehicle control system receives operation states fed back from the auxiliary machines, resulting in excessive occupancies of communication resources of the vehicle control system.

It can be seen that the vehicle control system controls the auxiliary machines including the DC/DC converter and the air compressor and receives the operation states fed back by these auxiliary machines, which results in adverse effects on the control and the communications performed by the vehicle control system.

### SUMMARY

In view of this, a system and a method for controlling power for a fuel cell are provided according to embodiments of the present disclosure, to prevent the adverse effects on control and communications performed a vehicle control system resulting from that the vehicle control system directly controls auxiliary machines including a DC/DC converter and an air compressor and receives operation states fed back from these auxiliary machines.

The following technical solutions are provided according to the embodiments of the present disclosure in order to achieve the above objectives.

A system for controlling power for a fuel cell is provided according to an aspect of the embodiments of the present disclosure. The system includes a main control unit, an inverter control unit, multiple DC/DC control units, a high-voltage power distribution management unit, a first direct current filter circuit and a second direct current filter circuit. The main control unit is connected to the inverter control unit, each of the multiple DC/DC control units, and the high-voltage power distribution management unit. The main control unit is configured to be connected to a vehicle controller, and generate, in response to a demand power instruction and a switch instruction that are sent by the vehicle controller, control instructions for controlling the inverter control unit, the plurality of DC/DC control units and the high-voltage power distribution management unit to perform respective operations. The switch instruction is selected from a starting instruction and a stopping instruction. The inverter control unit is configured to be connected to an air compressor for a fuel cell stack, and is configured to control, in response to a demand torque control instruction, the air compressor to operate at a demand rotation speed. The high-voltage power distribution management unit is configured to be connected to a balance of plant BOP for the fuel cell stack, and is configured to control, in response to a power-on control instruction, the BOP to be powered on, and control, in response to a power-down control instruction, the BOP to be powered off. The first direct current filter circuit is configured to filter first high-voltage direct current power generated by the fuel cell stack under control of the BOP, the air compressor and the multiple DC/DC control units, and distribute the filtered first high-voltage direct current power among the multiple DC/DC control units. The multiple DC/DC control units are connected in parallel and each are configured to: receive the filtered first high-voltage direct current power; output, in response to the first high-voltage direct current power, a demand current instruction and a phase angle instruction, second high-voltage direct current power to the second direct current filter circuit through a direct current bus. The second direct current filter circuit is configured to filter the second high-voltage direct current power and output the filtered second high-voltage direct current power to a vehicle driving system.

In an embodiment, the main control unit is configured to: generate, for the inverter control unit, a first demand torque control instruction in response to the demand power instruction and in response to the starting instruction that are sent by the vehicle controller; generate, for each of the plurality of DC/DC control units, a first demand current instruction and a first phase angle instruction in response to the demand power instruction and in response to the starting instruction; and generate, for the high-voltage power distribution management unit, the power-on control instruction in response to the demand power instruction and in response to the starting instruction. The demand power instruction indicates a power to be outputted by the main control unit in order to control the fuel cell to start operating. The inverter control unit is configured to control, in response to the first demand torque control instruction, the air compressor to operate at a first demand rotation speed. The high-voltage power distribution management unit is configured to control, in response to the power-on control instruction, the BOP to be powered on. The multiple DC/DC control units each are configured to: receive the first high-voltage direct current power filtered by the first direct current filter circuit; and output, based on the first high-voltage direct current power, the first demand current instruction and the first phase angle instruction, the second high-voltage direct current power to the second direct current filter circuit through the direct current bus.

In an embodiment, the main control unit is configured to: generate a second demand torque control instruction in response to the stopping instruction sent by the vehicle controller; calculate a second demand torque based on a preset rotation speed at which the air compressor operates during shutdown, in response to the stopping instruction sent by the vehicle controller; and generate, in response to the stopping instruction, the power-down control instruction for the high-voltage power distribution management unit. The inverter control unit is configured to receive the second demand torque control instruction and the second demand torque, and control, in response to the second demand torque control instruction, the air compressor to operate at a second demand rotation speed. The high-voltage power distribution management unit is configured to control, in response to the power-down control instruction, the BOP to be powered off.

In an embodiment, the main control unit includes an external power supply interface, a communication interface, an EMC filter circuit, a power supply circuit, a communication circuit, a first microcontroller and a peripheral circuit, an analog sampling circuit and a digital outputting circuit. The power supply circuit is connected to the EMC filter circuit, the communication circuit, the first microcontroller, the peripheral circuit, the analog sampling circuit, and the digital outputting circuit. The EMC filter circuit is connected to the communication circuit. The communication circuit is connected to the first microcontroller and the peripheral circuit. The first microcontroller and the peripheral circuit are connected to the analog sampling circuit and the digital outputting circuit.

In an embodiment, the inverter control unit includes a first low-voltage power supply circuit, a second microcontroller circuit, an inverter driving unit, an inverter power module, and an alternating current filter circuit. The first low-voltage power supply circuit is connected to the second microcontroller circuit and the inverter driving unit. The second microcontroller circuit is connected to the inverter driving unit and the inverter power module. The inverter driving unit is connected to the inverter power module. The inverter power module is connected to the alternating current filter circuit, and is configured to be connected to the direct current bus. The alternating current filter circuit is configured to be connected to the air compressor.

In an embodiment, the DC/DC control unit includes a second low-voltage power supply circuit, a third microcontroller circuit, a DC/DC driving unit, and a DC/DC power module. The second low-voltage power supply circuit is connected to the third microcontroller circuit and the DC/DC driving unit. The third microcontroller circuit is connected to the DC/DC driving unit and the DC/DC power module. The DC/DC driving unit is connected to the DC/DC power module. The DC/DC power module is connected to the first direct current filter circuit.

In an embodiment, the system further includes a cooling plate temperature sensor. The cooling plate temperature sensor connected to the main control unit and configured to acquire a temperature of a cooling plate and send the acquired temperature to the main control unit.

A method for controlling power for a fuel cell is provided according to another aspect of the embodiments of the present disclosure. The method is applied to the system controlling power for a fuel cell. The method includes: determining, by the main control unit in response to the demand power instruction and the switch instruction sent by the vehicle controller, an operation mode; and generating, by the main control unit based on the determined operation mode, control instructions for controlling the inverter control unit, the plurality of DC/DC control units and the high-voltage power distribution management unit to perform respective operations, where the operation mode is selected from a starting mode, a normal operation mode, and a stopping mode; generating a demand starting torque control instruction in response to the starting instruction and sending the demand starting torque control instruction to the inverter control unit by the main control unit, generating a power-on control instruction in response to the starting instruction and sending the power-on control instruction to the high-voltage power distribution management unit by the main control unit, regulating a torque of the air compressor by the inverter control unit in response to the demand starting torque control instruction to control the air compressor to operate at a demand starting rotation speed, and controlling by the high-voltage power distribution management unit in response to the power-on control instruction the BOP to be powered on, in response to the determination that the operation mode is the starting mode; generating a demand normal operation torque control instruction in response to the demand power instruction and sending the demand normal operation torque control instruction to the inverter control unit by the main control unit, generating a current control instruction in response to the demand power instruction and sending the current control instruction to each of the plurality of DC/DC control units by the main control unit, regulating a torque of the air compressor in response to the demand normal operation torque control instruction by the inverter control unit to control the air compressor to operate at a demand normal operation rotation speed, outputting high-voltage direct current power in response to the current control instruction by each of the plurality of DC/DC control units, in response to the determination that the operation mode is the normal operation mode; and generating a demand stopping torque control instruction in response to the stopping instruction and sending the demand stopping torque control instruction to the inverter control unit by the main control unit, generating a power-down control instruction in response to the stopping instruction and sending by the main control unit the power-down control instruction to the high-voltage power management unit, regulating a torque of the air compressor by the inverter control unit in response to the stopping demand torque control instruction to control the air compressor to operate at a demand stopping rotation speed, controlling by the high-voltage power distribution management unit in response to the power-down control instruction the BOP to be powered off, in response to the determination that the operation mode is the stopping mode, wherein the main control unit is provided with a microcontroller suitable for operations or control to be performed by the main control unit, the inverter control unit is provided with a microcontroller suitable for operations or control to be performed by the inverter control unit, and each of the plurality of DC/DC control units is provided with a microcontroller suitable for operations or control to be performed by the DC/DC control unit.

In an embodiment, the generating a current control instruction in response to the demand power instruction and sending the current control instruction to each of the plurality of DC/DC control units by the main control unit includes: generating, for each of the plurality of DC/DC control units, a first demand current instruction and a first phase angle instruction, and sending the first demand current instruction and the first phase angle instruction to the DC/DC control unit, wherein the high-voltage direct current power is outputted by the DC/DC control unit in response to the first demand current instruction and the first phase shift instruction.

In an embodiment, the generating a demand stopping torque control instruction in response to the stopping instruction and sending the demand stopping torque control instruction to the inverter control unit by the main control unit includes: calculating a demand stopping torque in response to the stopping instruction and a preset rotation speed at which the air compressor operates during shutdown, generating the demand stopping torque control instruction, and sending the demand stopping torque control instruction to the inverter control unit, where the torque of the air compressor is regulated by the inverter control unit in response to the demand stopping torque control instruction so that the air compressor is controlled to operate at the demand stopping rotation speed.

With the system and the method for controlling power for a fuel cell according to the embodiments of the present disclosure, the main control unit is connected to the vehicle controller, the inverter control unit, each of the multiple DC/DC control units, and the high-voltage power distribution management unit. The main control unit generates, in response to a demand power instruction and a switch instruction that are sent by the vehicle controller, control instructions for controlling the inverter control unit, the plurality of DC/DC control units and the high-voltage power distribution management unit to perform respective operations. The inverter control unit is connected to an air compressor for a fuel cell stack, controls, in response to a demand torque control instruction, the air compressor to operate at a demand rotation speed. The high-voltage power distribution management unit is connected to a BOP for the fuel cell stack, and controls, in response to a power-on control instruction, the BOP to be powered on, and controls, in response to a power-down control instruction, the BOP to be powered off. The first direct current filter circuit filters first high-voltage direct current power generated by the fuel cell stack under control of the BOP, the air compressor and the multiple DC/DC control units, and distributes the filtered first high-voltage direct current power among the plurality of DC/DC control units. The multiple DC/DC control units are connected in parallel and each receive the filtered first high-voltage direct current power; and output, based on the first high-voltage direct current power, a demand current instruction and a phase angle instruction, second high-voltage direct current power to the second direct current filter circuit through a direct current bus. The second direct current filter circuit filters the second high-voltage direct current power and outputs the filtered second high-voltage direct current power to a vehicle driving system. In the present disclosure, the main control unit controls, in response to the demand power instruction and the switch instruction sent by the vehicle controller, the inverter control unit, the multiple DC/DC control units and the high-voltage power distribution management unit to perform respective operations. It is unnecessary for the vehicle controller to directly control the inverter control unit, the multiple DC/DC control units and the high-voltage power distribution management unit individually. Moreover, the main control unit receives the operation states fed back from the inverter control unit, the multiple DC/DC control units and the high-voltage power distribution management unit, and sends the received operation states to the vehicle controller. Therefore, it is also unnecessary for the vehicle controller to directly receive the operation states fed back from the inverter control unit, the multiple DC/DC control units and the high-voltage power distribution management unit. In this way, control and communications performed by the vehicle controller can be simplified.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the provided drawings without any creative effort.
Figure 1 is a schematic diagram illustrating a system architecture for controlling power for a fuel cell according to an embodiment of the present disclosure;
Figure 2 is a structural block diagram illustrating a system for controlling power for a fuel cell according to an embodiment of the present disclosure;
Figure 3 is a structural block diagram illustrating the system for controlling power for a fuel cell according to another embodiment of the present disclosure;
Figure 4 is a block diagram illustrating control on power outputted by a fuel cell according to an embodiment of the present disclosure; and
Figure 5 is a schematic flowchart illustrating a method for controlling power for a fuel cell according to an embodiment of the present disclosure.

### DETAILED DESCRIPTION OF EMBODIMENTS

Technical solutions of the embodiments of the present disclosure are described clearly and completely below in conjunction with the drawings of the embodiments of the present disclosure. Apparently, the embodiments described below are only some rather than all the embodiments of the present disclosure. Any other embodiments obtained by those skilled in the art based on the embodiments in the present disclosure without any creative effort fall within the protection scope of the present disclosure.

In the present disclosure, terms "include", "comprise" or any other variants are intended to be non-exclusive. Therefore, a process, method, article or device including a series of elements includes not only the elements but also other elements that are not enumerated, or also include elements inherent for the process, method, article or device. Unless expressively limited otherwise, a process, method, article or device limited by "comprising/including a(n) ..." does not exclude existence of another identical element in such process, method, article or device.

The terms such as "first", "second", "third", "fourth" and the like (if any) in the specification, claims and drawings of the present disclosure are only used to distinguish similar objects, rather than describe a particular order or sequence. It should be understood that terms discussed above may be exchanged when appropriate, such that the embodiments of the present disclosure described herein can be implemented in an order different from the order shown or described herein.

According to the **BACKGROUND** part, a vehicle control system directly controls auxiliary machines including a DC/DC converter and an air compressor individually and receives operation states fed back from the auxiliary machines, resulting in adverse effects on control and communications performed by the vehicle control system.

Therefore, a system and a method for controlling power for a fuel cell are provided according to the embodiments of the present disclosure, to prevent the adverse effects on the control and the communications performed by the vehicle control system resulting from that the vehicle control system directly controls the auxiliary machines including the DC/DC converter and the air compressor and receives operation states fed back by these auxiliary machines.

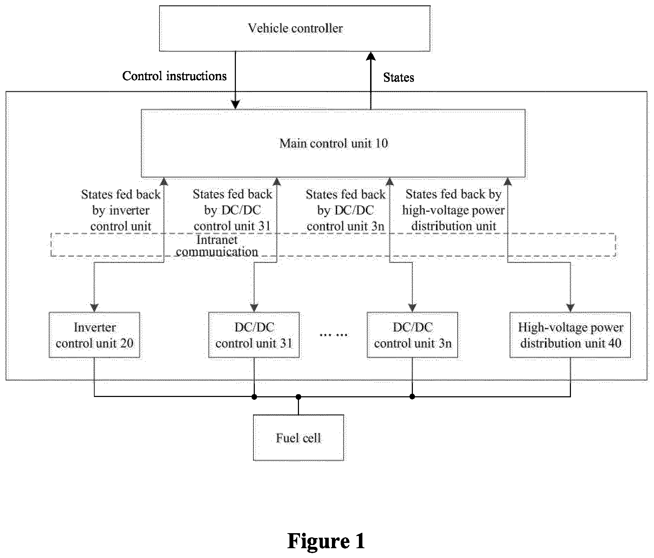

Reference is made to Figure 1, which is a schematic diagram illustrating a system architecture for controlling power for a fuel cell according to an embodiment of the present disclosure. The architecture includes a main control unit 10, an inverter control unit 20, multiple DC/DC control units and a high-voltage power distribution management unit 40.

The multiple DC/DC control units include a DC/DC control unit 31, a DC/DC control unit 32,..., and a DC/DC control unit 3n, where n is a positive integer.

The main control unit 10 is connected to a vehicle controller, the inverter control unit 20, each of the multiple DC/DC control units and the high-voltage power distribution management unit 40.

It should be noted that where the vehicle controller is physically arranged and what functions the vehicle controller implements are not limited herein. For example, the vehicle controller may be a vehicle controller unit VCU, a fuel cell controller unit FCU, or a stand-alone electronic control unit (ECU).

The inverter control unit 20, each of the multiple DC/DC control units, and the high-voltage power distribution management unit 40 are connected to the fuel cell.

In a process of controlling the power outputted by the fuel cell, the main control unit receives a control instruction from the vehicle controller, and controls, in response to the control instruction, the inverter control unit, the multiple DC/DC control units and the high-voltage power distribution management unit individually to perform respective operations. Specifically, the main control unit controls the inverter control unit to regulate a rotation speed of the air compressor. The main control unit controls each of the multiple DC/DC control units to regulate a current outputted by the fuel cell. The main control unit controls the high-voltage power distribution management unit to control the fuel cell to be powered on or off.

In the above process of controlling the power outputted by the fuel cell, the main control unit controls, in response to the control instruction sent by the vehicle controller, the inverter control unit, the multiple DC/DC control units and the high-voltage power distribution management unit to perform respective operations. Therefore, it is unnecessary for the vehicle controller to directly control the inverter control unit, the multiple DC/DC control units and the high-voltage power distribution management unit individually. Moreover, the main control unit receives operation states fed back from the inverter control unit, the multiple DC/DC control units and the high-voltage power distribution management unit, and sends the received operation states to the vehicle controller. Therefore, it is also unnecessary for the vehicle controller to directly receive the operation states fed back by the inverter control unit, the multiple DC/DC control units and the high-voltage power distribution management unit individually. In this way, control and communications performed by the vehicle controller can be simplified, which is described in detail through the following embodiments.

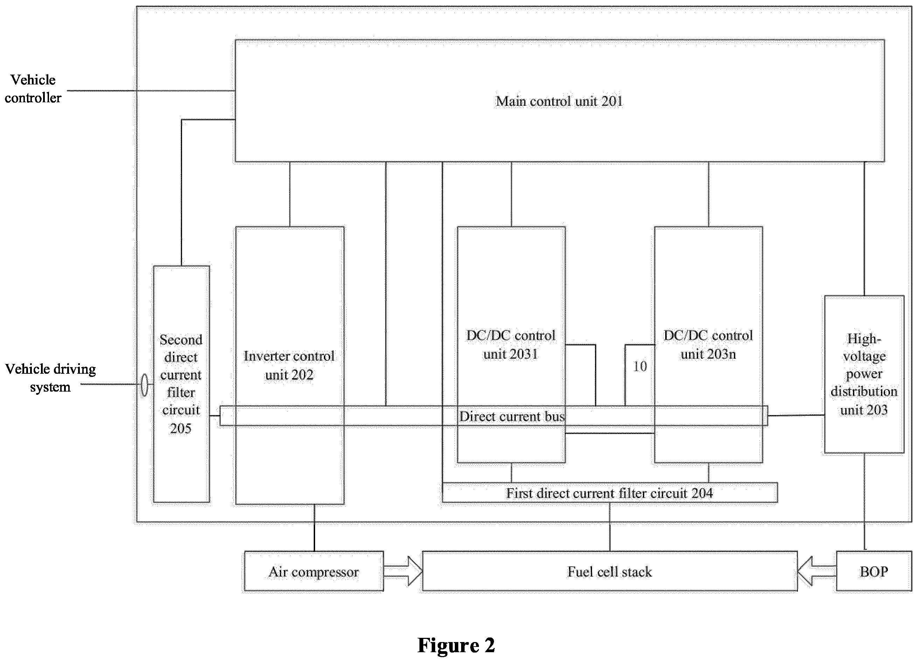

Based on the system architecture according to the above embodiment of the present disclosure, reference is made to Figure 2, which is a structural block diagram illustrating a system for controlling power for a fuel cell according to an embodiment of the present disclosure. The system includes a main control unit 201, an inverter control unit 202, multiple DC/DC control units, a high-voltage power distribution management unit 203, a first direct current filter circuit 204 and a second direct current filter circuit 205.

The multiple DC/DC control units include a DC/DC control unit 2031, a DC/DC control unit 2032,..., and a DC/DC control unit 203n, where n is a positive integer.

The main control unit 201 is connected to a vehicle controller, the inverter control unit 202, each of the multiple DC/DC control units, and the high-voltage power distribution management unit 203. The main control unit 201 is configured to generate, in response to a demand power instruction and a switch instruction that are sent by the vehicle controller, control instructions for controlling the inverter control unit 202, the multiple DC/DC control units and the high-voltage power distribution management unit 203 to perform respective operations. The switch instruction is selected from at least a starting instruction and a stopping instruction.

In an embodiment, the main control unit is connected to the inverter control unit, each of the multiple DC/DC control units, and the high-voltage power distribution management unit through high-speed communication. The main control unit synchronously controls the inverter control unit, the multiple DC/DC control units, and the high-voltage power distribution management unit based on a same time reference.

In the embodiments of the present disclosure, each of the main control unit, the inverter control unit and the multiple DC/DC control units is provided with a microcontroller inside. The microcontroller is provided for implementing only core functions suitable for an operation or control to be performed by the unit where the microcontroller is arranged. For example, the main control unit performs power loop control and power distribution for which relatively slow response is sufficient, and therefore may adopt an ARM core controller. The inverter control unit and the multiple DC/DC control units perform current regulation and torque regulation for which relatively quick response is indispensable, each implements a single function and therefore may adopt a micro DSP, FPGA or the like.

The inverter control unit 202 is connected to an air compressor for a fuel cell stack. The inverter control unit 202 is configured to control, in response to a demand torque control instruction, the air compressor to operate at a demand rotation speed.

The high-voltage power distribution management unit 203 is connected to a balance of plant (BOP) for the fuel cell stack. The high-voltage power distribution management unit 203 is configured to control, in response to a power-on control instruction, the BOP to be powered on, and control, in response to a power-down control instruction, the BOP to be powered off.

The multiple DC/DC control units are connected in parallel. The fuel cell stack generates first high-voltage direct current power under the control of the BOP, the air compressor and the multiple DC/DC control units. The first direct current filter circuit 204 filters the first high-voltage direct current power and then distributes the filtered first high-voltage direct current power among the multiple DC/DC control units.

The multiple DC/DC control units each output, based on the first high-voltage direct current power, a demand current instruction and a phase angle instruction, second high-voltage direct current power to the second direct current filter circuit 205 through a direct current bus.

It should be noted that, the number of the DC/DC control units connected in parallel is adaptable to various fuel cells in practice. It should also be noted that the main control unit calculates a phase angle for each DC/DC control unit based on the total number of the DC/DC control units applied in practice to achieve interleaving, thereby preventing a ripple.

The second direct current filter circuit 205 is configured to filter the second high-voltage direct current power and output the filtered second high-voltage direct current power to a vehicle driving system.

In the embodiments of the present disclosure, the main control unit controls, in response to the demand power instruction and the switch instruction sent by the vehicle controller, the inverter control unit, the multiple DC/DC control units and the high-voltage power distribution management unit to perform respective operations. It is unnecessary for the vehicle controller to directly control the inverter control unit, the multiple DC/DC control units and the high-voltage power distribution management unit individually. Moreover, the main control unit receives the operation states fed back from the inverter control unit, the multiple DC/DC control units and the high-voltage power distribution management unit, and sends the received operation states to the vehicle controller. Therefore, it is also unnecessary for the vehicle controller to directly receive the operation states fed back from the inverter control unit, the multiple DC/DC control units and the high-voltage power distribution management unit. In this way, control and communications performed by the vehicle controller can be simplified.

In addition, the vehicle controller indirectly controls the inverter control unit, the multiple DC/DC control units, and the high-voltage power distribution management unit to perform respective operations via the main control unit flexibly. Since it is unnecessary for the vehicle controller to directly control the inverter control unit, the multiple DC/DC control units and the high-voltage power distribution management unit individually, the vehicle controller has a simple structure, thereby reducing costs. Furthermore, the inverter control unit, the multiple DC/DC control units and the high-voltage power distribution management unit each provided with a microcontroller inside sufficient to perform corresponding functions, thereby further reducing costs successfully.

Based on the system for controlling power for a fuel cell illustrated in Figure 2 according to the above embodiment of the present disclosure, the following describes details that the main control unit generates, in response to the demand power instruction and the switch instruction that are sent by the vehicle controller, control instructions for controlling the inverter control unit, the multiple DC/DC control units and the high-voltage power distribution management unit to perform respective operations in order to control the fuel cell to start operating and in order to control the fuel cell to stop operating.

### 1) Details about controlling the fuel cell to start operating

The main control unit generates, in response to the demand power instruction and the starting instruction sent by the vehicle controller, a first demand torque control instruction for controlling the inverter control unit. Specifically, the main control unit acquires, in response to the demand power instruction and the starting instruction that are sent by the vehicle controller, the first demand torque control instruction from a predetermined air compressor rotation speed regulation algorithm, and outputs the acquired first demand torque control instruction to the inverter control unit. The demand power instruction indicates power to be outputted by the main control unit in order to control the fuel cell to start operating.

The inverter control unit is configured to control, in response to the first demand torque control instruction, the air compressor to operate at a first demand rotation speed, i.e., a second rotation speed matching a first demand torque.

The main control unit further generates, in response to the demand power instruction and the starting instruction that are sent by the vehicle controller, a power-on control instruction for controlling the high-voltage power distribution management unit. Specifically, the main control unit acquires, in response to the demand power instruction and the starting instruction that are sent by the vehicle controller, the power-on control instruction from a predetermined power-on control logic, and outputs the acquired power-on control instruction to the high-voltage power distribution management unit.

The high-voltage power distribution management unit controls, in response to the power-on control instruction, the BOP to be powered on.

The main control unit further generates, for each of the multiple DC/DC control units, in response to the demand power instruction and the starting instruction that are sent by the vehicle controller, a first demand current instruction and a first phase angle instruction for controlling the DC/DC control unit. Specifically, the main control unit acquires, in response to the demand power instruction and the starting instruction that are sent by the vehicle controller, the first demand current instruction and the first phase angle instruction from a predetermined power regulation algorithm, a predetermined current distribution algorithm and a predetermined phase angle calculation algorithm, and outputs the acquired first demand current instruction and the acquired first phase angle instruction to the DC/DC control unit.

The first direct current filter circuit filters the first high-voltage direct current power from the fuel cell stack and then distributes the filtered first high-voltage direct current power among the multiple DC/DC control units. The multiple DC/DC control units each output the second high-voltage direct current power based on the first high-voltage direct current power, the first demand current instruction and the first phase angle instruction. The second high-voltage direct current power from all the multiple DC/DC control units flows into the second direct current filter circuit through the direct current bus.

### 2) Details about controlling the fuel cell to stop operating

The main control unit generates a second demand torque control instruction in response to a stopping instruction sent by the vehicle controller, and calculates a second demand torque based on a preset rotation speed at which the air compressor operates during shutdown. Specifically, the main control unit acquires, in response to the stopping instruction sent by the vehicle controller, the second demand torque control instruction from a predetermined air compressor rotation speed regulation algorithm, and outputs the calculated second demand torque control instruction to the inverter control unit.

The inverter control unit receives the second demand torque control instruction and the second demand torque, and controls, in response to the received second demand torque control instruction, the air compressor to operate at a second demand rotation speed, i.e., a second rotation speed matching the second demand torque. It should be understood that the second rotation speed is less than the first rotation speed. That is, the inverter control unit controls the air compressor to remove reactants.

The main control unit further generates, in response to the stopping instruction sent by the vehicle controller, a power-down control instruction for controlling the high-voltage power distribution management unit. Specifically, the main control unit acquires, in response to the stopping instruction sent by the vehicle controller, the power-down control instruction from a predetermined power-down control logic algorithm, and outputs the acquired power-down control instruction to the high-voltage power distribution management unit.

The high-voltage power distribution management unit controls, in response to the received power-down control instruction, the BOP to be powered off.

In the embodiments of the present disclosure, the main control unit controls, in response to the demand power instruction and the starting instruction that are sent by the vehicle controller, the inverter control unit, the multiple DC/DC control units and the high-voltage power distribution management unit to perform respective starting operations. Therefore, it is unnecessary for the vehicle controller to directly control the inverter control unit, the multiple DC/DC control units and the high-voltage power distribution management unit individually. Moreover, the main control unit receives starting states fed back by the inverter control unit, the multiple DC/DC control units and the high-voltage power distribution management unit, and sends the received starting states to the vehicle controller. Therefore, it is also unnecessary for the vehicle controller to directly receive the starting states fed back by the inverter control unit, the multiple DC/DC control units and the high-voltage power distribution management unit. The main control unit controls, in response to the stopping instruction sent by the vehicle controller, the inverter control unit, the multiple DC/DC control units and the high-voltage power distribution management unit to perform respective stopping operations. Therefore, it is unnecessary for the vehicle controller to directly control the inverter control unit, the multiple DC/DC control units and the high-voltage power distribution management unit individually. Moreover, the main control unit receives stopping states fed back by the inverter control unit, the multiple DC/DC control units and the high-voltage power distribution management unit, and sends the received stopping states to the vehicle controller. Therefore, it is unnecessary for the vehicle controller to directly receive the stopping states fed back by the inverter control unit, the multiple DC/DC control units and the high-voltage power distribution management unit. In this way, control and communications performed by the vehicle controller can be simplified.

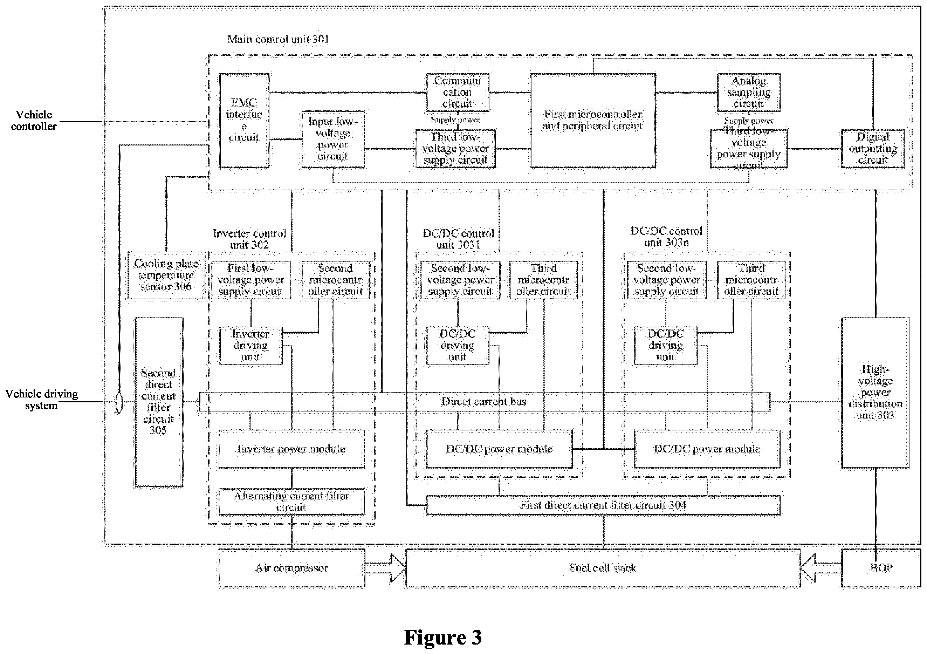

Based on the system for controlling power for a fuel cell illustrated in Figure 2 according to the above embodiment of the present disclosure, reference is made to Figure 3, which is a structural block diagram illustrating the system for controlling power for a fuel cell according to another embodiment of the present disclosure. The system includes a main control unit 301, an inverter control unit 302, multiple DC/DC control units, a high-voltage power distribution management unit 303, a first direct current filter circuit 304, a second direct current filter circuit 305, and a cooling plate temperature sensor 306.

The multiple DC/DC control units include a DC/DC control unit 3031, a DC/DC control unit 3032,..., and a DC/DC control unit 303n, where n is a positive integer. The multiple DC/DC control units are connected in parallel.

It should be noted that the main control unit 301, the inverter control unit 302, the multiple DC/DC control units, the high-voltage power distribution management unit 303, the first direct current filter circuit 304, the second direct current filter circuit 305, the air compressor, the BOP and the fuel cell stack are connected and interact as illustrated in Figure 2,which are not repeated here.

In practice, the main control unit 301 includes an external power supply interface, a communication interface, an EMC filter circuit, a power supply circuit, a communication circuit, a first microcontroller and a peripheral circuit, an analog sampling circuit and a digital outputting circuit.

The power supply circuit is connected to the EMC filter circuit, the communication circuit, the first microcontroller and the peripheral circuit, the analog sampling circuit, and the digital outputting circuit.

The EMC filter circuit is connected to the communication circuit.

The communication circuit is connected to the first microcontroller and the peripheral circuit.

The first microcontroller and the peripheral circuit are connected to the analog sampling circuit and the digital outputting circuit.

The first microcontroller is preset and is capable of implements basic functions of the main control unit.

The main control unit communicates with the vehicle controller, the inverter control unit, the multiple DC/DC control units and the high-voltage power distribution management unit through the communication interface, the communication circuit and the peripheral circuit.

The power supply circuit is connected to an external power supply through the external power supply interface and supplies power to other circuits in the main control unit. In an embodiment, the power supply circuit includes an input low-voltage power supply circuit and a third low-voltage power supply circuit. Specifically, the input low-voltage power supply circuit is connected to the external power supply through the external power supply interface, and supplies power to the other circuits in the main control unit through the third low-voltage power supply circuit.

The first microcontroller receives, through the communication circuit, the demand power instruction and the switch instruction that are sent by the vehicle controller. The control instructions generated by the first microcontroller in response to the demand power instruction and the switch instruction are outputted to the inverter control unit, the multiple DC/DC control units and the high-voltage power management unit, respectively.

The inverter control unit 302 includes a first low-voltage power supply circuit, a second microcontroller circuit, an inverter driving unit, an inverter power module, and an alternating current filter circuit.

The first low-voltage power supply circuit is connected to the second microcontroller circuit and the inverter driving unit.

The second microcontroller circuit is connected to the inverter driving unit and the inverter power module.

The second microcontroller circuit is preset and is capable of implements basic functions of the inverter control unit.

The inverter driving unit is connected to the inverter power module.

The inverter power module is connected to the alternating current filter circuit and the direct current bus.

The alternating current filter circuit is connected to the air compressor.

The DC/DC control unit (i.e., each DC/DC control unit in the multiple DC/DC control units) includes a second low-voltage power supply circuit, a third microcontroller circuit, a DC/DC driving unit, and a DC/DC power module.

The second low-voltage power supply circuit is connected to the third microcontroller circuit and the DC/DC driving unit.

The third microcontroller circuit is connected to the DC/DC driving unit and the DC/DC power module.

The third microcontroller circuit is preset and is capable of implements basic functions of the DC/DC control unit.

The DC/DC driving unit is connected to the DC/DC power module.

A first end of the DC/DC power module is connected to the first direct current filter circuit. A second end of the DC/DC power module is connected to the second filter circuit through the direct current bus.

It should be noted that respective DC/DC power modules in the multiple DC/DC control units are connected in parallel.

The cooling plate temperature sensor 306 is connected to the main control unit 301. The cooling plate temperature sensor 306 is configured to acquire a temperature of a cooling plate and send the acquired temperature to the main control unit, for the main control unit to regulate the temperature of the cooling plate based on the acquired temperature.

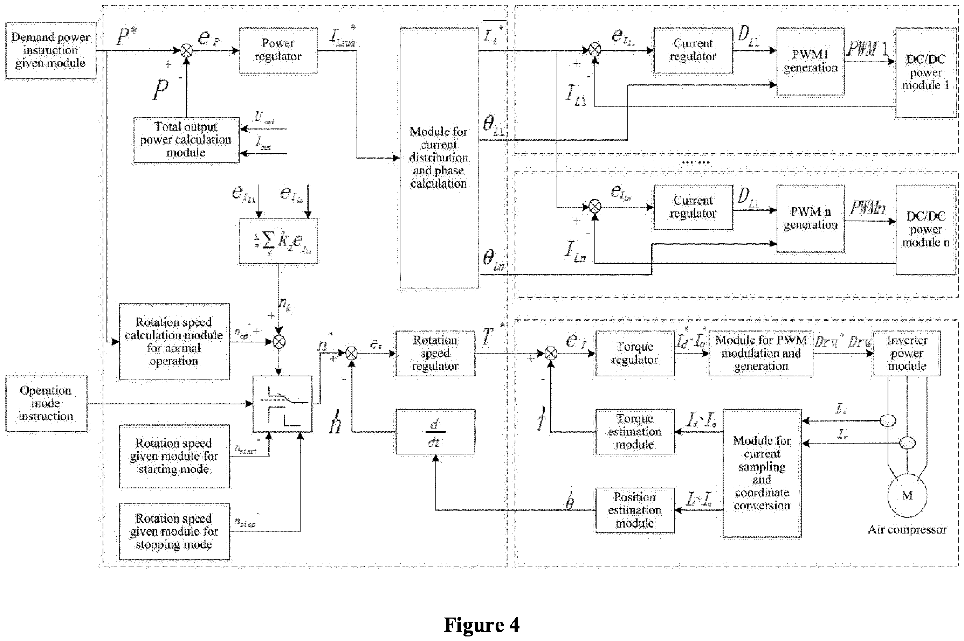

Details that the main control unit controls the multiple DC/DC control units and the inverter control unit are described below with reference to Figure 4 together with Figure 3, in order to facilitate the understanding.

The main control unit, specifically a total output power calculation module inside the main control unit, calculates an actual power *P* in response to a current signal *Iₒᵤₜ* and a voltage signal *Uₒᵤₜ* that are outputted by the DC/DC control unit. The main control unit then calculates a difference *eₚ* between the actual power *P* and a demand power instruction signal *P** and outputs the difference *eₚ* to a power regulator for loop power control. The power regulator outputs a regulation signal *I_{Lsum}** to a module for current distribution and phase calculation. The module for current distribution and phase calculation calculates a current signal *I̅_̅{̅L̅}̅*̅* and outputs the current signal *I̅_̅{̅L̅}̅*̅* to respective current regulators of the multiple DC/DC control units. The current regulators each output a PWM duty cycle signal *D.* For each of the multiple DC/DC control units, a driving signal for the DC/DC power module in the DC/DC control unit is generated in response to the PWM duty cycle signal *D* and a phase signal *θ* calculated by the module for current distribution and phase calculation.

The main control unit, specifically a demand rotation speed calculation module inside the main control unit, calculates a demand rotation speed 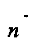 in response to the demand power instruction signal *P** sent by the vehicle controller. The inverter control unit, specifically a position estimation module inside the main control unit, outputs an estimated position signal. An estimated rotation speed 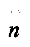 is obtained from a derivative of the estimated position signal. The demand rotation speed calculation module calculates a difference *eₙ* between the demand rotation speed 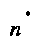 and the estimated rotation speed 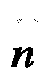 , and outputs the difference *eₙ* to a rotation speed regulator. The rotation speed regulator outputs a given demand torque signal *T** to the inverter control unit. The inverter control unit calculates a difference *e_{T}* between the received demand torque signal *T** and an estimated torque 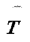 that is outputted by a torque estimation module, and outputs the difference *e_{T}* to a torque regulator. The torque regulator acquires, based on vector control, a driving signal *Dᵣᵥ* for the inverter power module in the inverter control unit and outputs the driving signal *Dᵣᵥ*. The inverter power module regulates the rotation speed of the air compressor.

In addition, a weighted average of current difference signals eIli generated by the multiple DC/DC control units is inputted to a channel upstream of a control loop for the air compressor, so that the air compressor can adapt its rotation speed timely to a change in a load to which the fuel cell stack supplies power via the DC/DC control units, thereby speeding up the response of the fuel cell stack and improving stability of the fuel cell stack.

In the embodiments of the present disclosure, the main control unit controls, based on the demand power vector control and the switch instruction that are sent by the vehicle controller, the inverter control unit, the multiple DC/DC control units and the high-voltage power distribution management unit to perform respective operations. Therefore, it is unnecessary for the vehicle controller to directly control the inverter control unit, the multiple DC/DC control units and the high-voltage power distribution management unit individually. Moreover, the main control unit receives operation states fed back by the inverter control unit, the multiple DC/DC control units and the high-voltage power distribution management unit, and sends the received operation states to the vehicle controller. Therefore, it is unnecessary for the vehicle controller to directly receive the operation states fed back by the inverter control unit, the multiple DC/DC control units and the high-voltage power distribution management unit. In this way, control and communications performed by the vehicle controller can be simplified. In addition, the channel upstream of the control loop for the air compressor is arranged between the DC/DC control units and the control loop, thereby speeding up the response of the fuel cell stack and improving stability of the fuel cell stack.

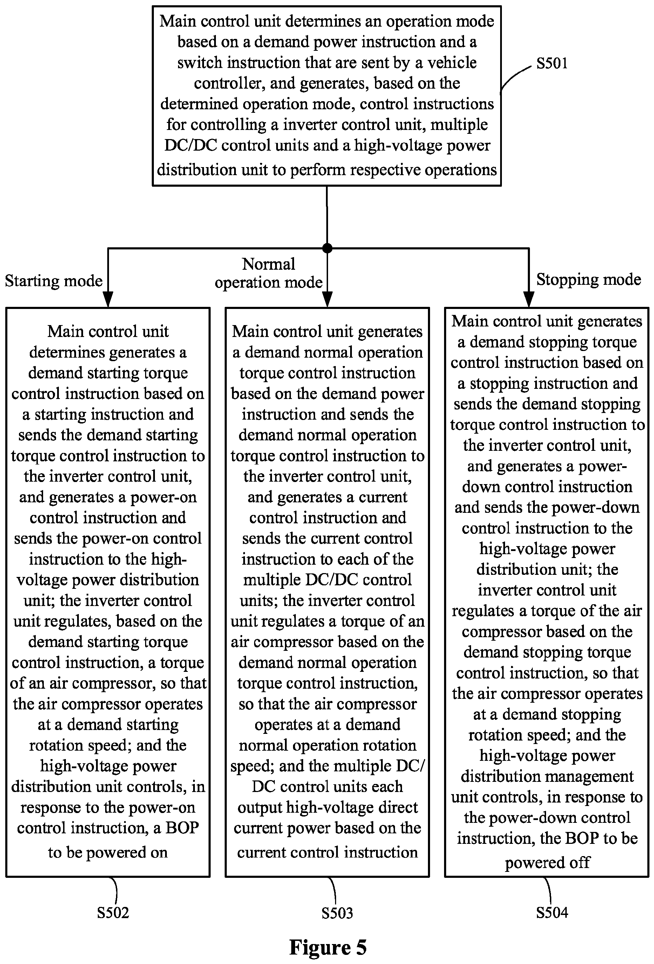

Corresponding to the above details about the system for controlling power for a fuel cell according to the embodiments of the present disclosure, a method for controlling power for a fuel cell is further provided according to an embodiment of the present disclosure. Referring to Figure 5, the method includes the following steps S501 to S504.

In step S501, the main control unit determines an operation mode in response to a demand power instruction and a switch instruction that are sent by the vehicle controller, and generates, based on the determined operation mode, control instructions for controlling the inverter control unit, the multiple DC/DC control units and the high-voltage power distribution management unit to perform respective operations.

In step S501, the operation mode is selected from a starting mode, a normal operation mode, and a stopping mode. In the starting mode, the fuel cell is controlled to start operating. In the normal loading mode, the fuel cell is controlled to output a target current. In the stopping mode, the fuel cell is controlled to stop operating.

In practice, when the main control unit determines based on the demand power and the switch instruction that are sent by the vehicle controller that the operation mode is the starting mode in step S501, the method proceeds to step S502. When the main control unit determines in response to the demand power instruction and the switch instruction that are sent by the vehicle controller that the operation mode is the normal operation mode in step S501, the method proceeds to step S503. When the main control unit determines based on the demand power and the switch instruction that are sent by the vehicle controller that the operation mode is the stopping mode in step S501, the method proceeds to step S504.

In step S502, the main control unit generates a demand starting torque control instruction in response to the starting instruction and sends the demand starting torque control instruction to the inverter control unit, and generates a power-on control instruction in response to the starting instruction and sends the power-on control instruction to the high-voltage power distribution management unit. The inverter control unit regulates, in response to the demand starting torque control instruction, a torque of the air compressor, so that the air compressor operates at a demand starting rotation speed. The high-voltage power distribution management unit controls, in response to the power-on control instruction, the BOP to be powered on.

Practically in step S502, the main control unit acquires, in response to the starting instruction, the demand starting torque control instruction from a predetermined air compressor rotation speed regulation algorithm, and sends the acquired demand starting torque control instruction to the inverter control unit. The inverter control unit controls, in response to the demand starting torque control instruction, the air compressor to operate the demand starting rotation speed, i.e., a rotation speed matching a demand starting torque. The main control unit acquires, in response to the starting instruction, the power-on control instruction from a predetermined power-on control logic, and sends the acquired power-on control instruction to the high-voltage power distribution management unit. The high-voltage power distribution management unit controls, in response to the received power-on control instruction, the BOP to be powered on.

In step S503, the main control unit generates a demand normal operation torque control instruction in response to the demand power instruction and sends the demand normal operation torque control instruction to the inverter control unit, and generates a current control instruction in response to the demand power instruction and sends the current control instruction to each of the multiple DC/DC control units. The inverter control unit regulates a torque of the air compressor in response to the demand normal operation torque control instruction, so that the air compressor operates at a demand normal operation rotation speed. The multiple DC/DC control units each output high-voltage direct current power in response to the current control instruction.

Practically in step S503, the main control unit acquires the demand normal operation torque control instruction in response to the demand power instruction from a predetermined air compressor rotation speed regulation algorithm and sends the acquired demand normal operation torque control instruction to the inverter control unit. The inverter control unit controls, in response to the demand normal operation torque control instruction, the air compressor to operate at the demand normal operation rotation speed, so that the air compressor operates at a rotation speed matching the demand normal operation torque. The main control unit acquires a first demand current instruction and a first phase angle instruction in response to the demand power instruction from a predetermined power regulation algorithm, a current distribution algorithm, and a phase calculation algorithm, and sends the first demand current instruction and the first phase angle instruction to each of the multiple DC/DC control unit. The multiple DC/DC control units each output the high-voltage direct current power in response to the first demand current instruction and first phase angle instruction.

In step S504, the main control unit generates a demand stopping torque control instruction in response to the stopping instruction and sends the demand stopping torque control instruction to the inverter control unit, and generates a power-down control instruction in response to the stopping instruction and sends the power-down control instruction to the high-voltage power distribution management unit. The inverter control unit regulates a torque of the air compressor in response to the demand stopping torque control instruction, so that the air compressor operates at a demand stopping rotation speed. The high-voltage power distribution management unit controls, in response to the power-down control instruction, the BOP to be powered off.

Practically in step S504, the main control unit calculates, in response to the stopping instruction, the demand stopping torque based on a preset rotation speed at which the air compressor operates during shutdown, generates the demand stopping torque control instruction, and sends the demand stopping torque control instruction to the inverter control unit. The inverter control unit controls, in response to the demand stopping torque control instruction, the air compressor to operate at the demand stopping rotation speed, i.e., a rotation speed matching the demand stopping torque. The main control unit acquires the power-down control instruction in response to the stopping instruction from a predetermined power-down control logic, and sends the power-down control instruction to the high-voltage power distribution management unit. The high-voltage power distribution management unit controls, in response to the power-down control instruction, the BOP to be powered off.

In the embodiments of the present disclosure, the main control unit determines the operation mode in response to the demand power instruction and the switch instruction that are sent by the vehicle controller, and controls the inverter control unit, the multiple DC/DC control units and the high-voltage power distribution management unit to perform operations matching the determined operation mode. Therefore, it is unnecessary for the vehicle controller to directly control the inverter control unit, each of the multiple DC/DC control units and the high-voltage power distribution management unit individually. Moreover, the main control unit sends operation states fed back from the inverter control unit, the multiple DC/DC control units and the high-voltage power distribution management unit to the vehicle controller. Therefore, it is also unnecessary for the vehicle controller to directly receive the operation states fed back by the inverter control unit, the multiple DC/DC control units and the high-voltage power distribution management unit individually. In this way, control and communications performed by the vehicle controller can be simplified.

The embodiments in the description are described in a progressive manner, the same and similar parts between embodiments may be referred to each other, and each embodiment focuses on the differences from other embodiments. In particular, since the system or the system embodiment is similar to the method embodiment, the system or the system embodiment is simply described and may refer to the relevant part of the method embodiment. The system and the system embodiments above are only schematic. Unit described as separate components may or may not be physically separated. A component shown as a unit may or may not be a physical unit, i.e. may be arranged in the same place or distributed among multiple network units. Some or all of the modules may be selected to implement the technical solution in the embodiments, depending on actual applications. Those skilled in the art can understand and implement the embodiments without any creative work.

Those skilled in the art should further be noted that, units and steps described in the embodiments disclosed herein may be implemented by electronic hardware, computer software or a combination thereof. In order to clearly illustrate interchangeability of the hardware and the software, steps and components in the embodiments have been described generally in terms of functions in the above description. Whether the functions are implemented by hardware or software depends on applications and constraint conditions specific to the technical solution. Those skilled in the art may implement the described functions for a particular application in various manners, all of which fall into the scope of the application.

The embodiments of the present disclosure are described above, so that those skilled in the art can implement or use the present disclosure. Various modifications to these embodiments are apparent for those skilled in the art. The general principles defined herein may be applied to other embodiments without departing from the spirit or scope of the present application. Therefore, the present disclosure is not limited to the embodiments disclosed herein, but has the widest scope in accordance to the principle and the novel features disclosed herein.

## Claims

1. A system for controlling power for a fuel cell, comprising:
a main control unit;
an inverter control unit;
a plurality of DC/DC control units;
a high-voltage power distribution management unit;
a first direct current filter circuit; and
a second direct current filter circuit, wherein
the main control unit is connected to the inverter control unit, each of the plurality of DC/DC control units, and the high-voltage power distribution management unit, and the main control unit is configured to be connected to a vehicle controller, and generate, in response to a demand power instruction and a switch instruction that are sent by the vehicle controller, control instructions for controlling the inverter control unit, the plurality of DC/DC control units and the high-voltage power distribution management unit to perform respective operations, wherein the switch instruction is selected from a starting instruction and a stopping instruction;
the inverter control unit is configured to be connected to an air compressor for a fuel cell stack, and is configured to control, in response to a demand torque control instruction, the air compressor to operate at a demand rotation speed;
the high-voltage power distribution management unit is configured to be connected to a balance of plant BOP for the fuel cell stack, and is configured to control, in response to a power-on control instruction, the BOP to be powered on, and control, in response to a power-down control instruction, the BOP to be powered off;
the first direct current filter circuit is configured to filter first high-voltage direct current power generated by the fuel cell stack under control of the BOP, the air compressor and the plurality of DC/DC control units, and distribute the filtered first high-voltage direct current power among the plurality of DC/DC control units;
the plurality of DC/DC control units are connected in parallel and each are configured to: receive the filtered first high-voltage direct current power; and output, based on the first high-voltage direct current power, a demand current instruction and a phase angle instruction, second high-voltage direct current power to the second direct current filter circuit through a direct current bus; and
the second direct current filter circuit is configured to filter the second high-voltage direct current power and output the filtered second high-voltage direct current power to a vehicle driving system.

2. The system according to claim 1, wherein
the main control unit is configured to:
generate, for the inverter control unit, a first demand torque control instruction in response to the demand power instruction and the starting instruction that are sent by the vehicle controller;
generate, for each of the plurality of DC/DC control units, a first demand current instruction and a first phase angle instruction in response to the demand power instruction and in response to the starting instruction; and
generate, for the high-voltage power distribution management unit, the power-on control instruction in response to the demand power instruction and in response to the starting instruction, wherein the demand power instruction indicates a power to be outputted by the main control unit in order to control the fuel cell to start operating;
the inverter control unit is configured to control, in response to the first demand torque control instruction, the air compressor to operate at a first demand rotation speed;
the high-voltage power distribution management unit is configured to control, in response to the power-on control instruction, the BOP to be powered on; and
the plurality of DC/DC control units each are configured to:
receive the first high-voltage direct current power filtered by the first direct current filter circuit; and
output, based on the first high-voltage direct current power, the first demand current instruction and the first phase angle instruction, the second high-voltage direct current power to the second direct current filter circuit through the direct current bus.

3. The system according to claim 1, wherein
the main control unit is configured to:
generate a second demand torque control instruction in response to the stopping instruction sent by the vehicle controller;
calculate a second demand torque based on a preset rotation speed at which the air compressor operates during shutdown, in response to the stopping instruction sent by the vehicle controller; and
generate, in response to the stopping instruction, the power-down control instruction for the high-voltage power distribution management unit;
the inverter control unit is configured to receive the second demand torque control instruction and the second demand torque, and control, in response to the second demand torque control instruction, the air compressor to operate at a second demand rotation speed; and
the high-voltage power distribution management unit is configured to control, in response to the power-down control instruction, the BOP to be powered off.

4. The system according to claim 1, wherein the main control unit comprises:
an external power supply interface;
a communication interface;
an EMC filter circuit;
a power supply circuit;
a communication circuit;
a first microcontroller and a peripheral circuit;
an analog sampling circuit; and
a digital outputting circuit, wherein
the power supply circuit is connected to the EMC filter circuit, the communication circuit, the first microcontroller, the peripheral circuit, the analog sampling circuit, and the digital outputting circuit;
the EMC filter circuit is connected to the communication circuit;
the communication circuit is connected to the first microcontroller and the peripheral circuit; and
the first microcontroller and the peripheral circuit are connected to the analog sampling circuit and the digital outputting circuit.

5. The system according to claim 1, wherein the inverter control unit comprises:
a first low-voltage power supply circuit;
a second microcontroller circuit;
an inverter driving unit;
an inverter power module; and
an alternating current filter circuit, wherein
the first low-voltage power supply circuit is connected to the second microcontroller circuit and the inverter driving unit;
the second microcontroller circuit is connected to the inverter driving unit and the inverter power module;
the inverter driving unit is connected to the inverter power module;
the inverter power module is connected to the alternating current filter circuit, and is configured to be connected to the direct current bus; and
the alternating current filter circuit is configured to be connected to the air compressor.

6. The system according to claim 1, wherein the plurality of DC/DC control units each comprise:
a second low-voltage power supply circuit;
a third microcontroller circuit;
a DC/DC driving unit; and
a DC/DC power module, wherein
the second low-voltage power supply circuit is connected to the third microcontroller circuit and the DC/DC driving unit;
the third microcontroller circuit is connected to the DC/DC driving unit and the DC/DC power module;
the DC/DC driving unit is connected to the DC/DC power module; and
the DC/DC power module is connected to the first direct current filter circuit.

7. The system according to any one of claims 1 to 6, further comprising:
a cooling plate temperature sensor connected to the main control unit and configured to acquire a temperature of a cooling plate and send the acquired temperature to the main control unit.

8. A method for controlling power for a fuel cell, wherein the method is applied to the system according to any one of claims 1 to 7, and the method comprises:
determining, by the main control unit based on the demand power instruction and the switch instruction sent by the vehicle controller, an operation mode; and generating, by the main control unit based on the determined operation mode, control instructions for controlling the inverter control unit, the plurality of DC/DC control units and the high-voltage power distribution management unit to perform respective operations, wherein the operation mode is selected from a starting mode, a normal operation mode, and a stopping mode;
generating a demand starting torque control instruction based on the starting instruction and sending the demand starting torque control instruction to the inverter control unit by the main control unit, generating a power-on control instruction in response to the starting instruction and sending the power-on control instruction to the high-voltage power distribution management unit by the main control unit, regulating a torque of the air compressor by the inverter control unit based on the demand starting torque control instruction to control the air compressor to operate at a demand starting rotation speed, and controlling by the high-voltage power distribution management unit in response to the power-on control instruction the BOP to be powered on, in response to the determination that the operation mode is the starting mode;
generating a demand normal operation torque control instruction based on the demand power instruction and sending the demand normal operation torque control instruction to the inverter control unit by the main control unit, generating a current control instruction based on the demand power instruction and sending the current control instruction to each of the plurality of DC/DC control units by the main control unit, regulating a torque of the air compressor based on the demand normal operation torque control instruction by the inverter control unit to control the air compressor to operate at a demand normal operation rotation speed, outputting high-voltage direct current power based on the current control instruction by each of the plurality of DC/DC control units, in response to the determination that the operation mode is the normal operation mode; and
generating a demand stopping torque control instruction based on the stopping instruction and sending the demand stopping torque control instruction to the inverter control unit by the main control unit, generating a power-down control instruction based on the stopping instruction and sending by the main control unit the power-down control instruction to the high-voltage power management unit, regulating a torque of the air compressor by the inverter control unit based on the stopping demand torque control instruction to control the air compressor to operate at a demand stopping rotation speed, controlling by the high-voltage power distribution management unit in response to the power-down control instruction the BOP to be powered off, in response to the determination that the operation mode is the stopping mode, wherein the main control unit is provided with a microcontroller suitable for operations or control to be performed by the main control unit, the inverter control unit is provided with a microcontroller suitable for operations or control to be performed by the inverter control unit, and each of the plurality of DC/DC control units is provided with a microcontroller suitable for operations or control to be performed by the DC/DC control unit.

9. The method according to claim 8, wherein the generating a current control instruction based on the demand power instruction and sending the current control instruction to each of the plurality of DC/DC control units by the main control unit comprises:
generating, for each of the plurality of DC/DC control units, a first demand current instruction and a first phase angle instruction, and sending the first demand current instruction and the first phase angle instruction to the DC/DC control unit, wherein the high-voltage direct current power is outputted by the DC/DC control unit based on the first demand current instruction and the first phase shift instruction.

10. The method according to claim 8, wherein the generating a demand stopping torque control instruction based on the stopping instruction and sending the demand stopping torque control instruction to the inverter control unit by the main control unit comprises:
calculating a demand stopping torque based on the stopping instruction and a preset rotation speed at which the air compressor operates during shutdown, generating the demand stopping torque control instruction, and sending the demand stopping torque control instruction to the inverter control unit, wherein the torque of the air compressor is regulated by the inverter control unit based on the demand stopping torque control instruction so that the air compressor is controlled to operate at the demand stopping rotation speed.
